## Europäisches Patentamt
## European Patent Office
## Office européen des brevets

(19)

(11) Veröffentlichungsnummer: **0 212 275**
**B1**

(12) **EUROPÄISCHE PATENTSCHRIFT**

(45) Veröffentlichungstag der Patentschrift: **09.05.90**

(51) Int. Cl.⁵: **G 01 V 3/08**

(21) Anmeldenummer: **86109875.4**

(22) Anmeldetag: **18.07.86**

(54) **Verfahren zur Bestimmung der Grenzen von unterirdischen Erdgas-Lagerstätten.**

(30) Priorität: **16.08.85 DE 3529466**

(43) Veröffentlichungstag der Anmeldung:
**04.03.87 Patentblatt 87/10**

(45) Bekanntmachung des Hinweises auf die
Patenterteilung:
**09.05.90 Patentblatt 90/19**

(84) Benannte Vertragsstaaten:
**AT DE FR GB IT**

(56) Entgegenhaltungen:
**FR-A- 924 110**
**FR-A-1 448 887**
**US-A-2 368 218**
**US-A-4 449 099**

**CHEMICAL & ENGINEERING NEWS, Band 49,**
**Nr. 21, 24. Mai 1971, Seiten 32,33, Columbus,**
**Ohio, US; "Electrochemical readings detect oil"**

(73) Patentinhaber: **Pipeline Engineering**
**Gesellschaft für Planung, Bau- und**
**Betriebsüberwachung von Fernleitungen mit**
**beschränkter Haftung**
**Kallenbergstrasse 5**
**D-4300 Essen 1 (DE)**

(72) Erfinder: **Denzau, Helmut, Dr.rer.nat. Diplom-**
**Physiker**
**Memelstrasse 61**
**D-4300 Essen 15 (DE)**
Erfinder: **Hollinderbäumer, Joachim, Dr.rer.nat.**
**Diplom-Geophysiker Rauhhölterberg 17**
**D-4300 Essen-Steele (DE)**

(74) Vertreter: **Zenz, Joachim Klaus et al**
**Am Ruhrstein 1**
**D-4300 Essen 1 (DE)**

**Beschreibung**

Die Erfindung betrifft ein geoelektrisches Verfahren zur Bestimmung der Grenzen von mit Kohlenwasserstoffen, insbesondere Erdgas oder Erdöl gefüllten unterirdischen Lagerstätten, wobei wenigstens ein Meßsondenprofil, bestehend aus mehreren im gegenseitigen Abstand hintereinander angeordneten, die Eigenpotentiale an der Erdoberfläche messenden Sonden, an der Erdoberfläche derart verlegt wird, daß mehrere Meßsonden außerhalb und mehrere Meßsonden innerhalb des die Lagerstätte überdeckenden Erdoberflächenbereichs liegen.

Zur Festellung der Gasausbreitung in Aquiferspeichern gab es in der geophysikalischen Praxis bisher nur die Alternative zwischen Bohrlochmessungen und seismischen Meßverfahren, wobei nur die letzteren obertägig eingesetzt werden konnten. Beim seismischen Meßverfahren wird Gas aufgrund von Änderungen des Reflexionsbildes und der Reflexionsamplitude der seismischen Wellen nachgewiesen. Voraussetzung hierfür ist eine Messung ohne Gas, d.h. eine Nullmessung als Bezugsgröße. Durch Anlegen eines geeigneten Profilnetzes kann die Gasausbreitung z.B. während der Aufbauphase eines Speichers von Zeit zu Zeit flächenhaft kontrolliert werden. Sowohl die seismischen Messungen selbst als auch die Auswertung der Reflexionsamplituden erfordern aufwendige und teure Maßnahmen. Im Ergebnis liefert die seismische Vermessung für jedes Profil Informationen über Teufe, Mächtigkeit und Gassättigung der Aquifere. Damit ist auch die Bestimmung des Gasrandes möglich. Die Genauigkeit der Aussage hängt von der Reflexionsqualität ab, die vor allem durch das Deckgebirge bestimmt wird.

Aus Chemical & Engineering News, 49, Nr. 21, 1971, Seiten 32, 33, ist es bekannt, daß durch Messung der elektrochemischen Eigenschaften der Oberfläche Hinweise auf unterirdische Erdöl-Lagerstätten gewonnen werden können. Die Meßsonden sollen auf Tiefen von weniger als 1,70 m angeordnet und in einem Gitter in Abständen von l/2 oder l/4 Meile angeordnet werden. Für die Bestimmung der Grenzen von unterirdischen Lagerstätten eignen sich die bekannten elektrischen Messungen nicht.

En Verfahren ähnlich demjenigen der gattungsgemäßen Art ist aus der US—A—2 368 218 bekannt. Hierbei sollen im wesentlichen vertikal gerichtete natürliche elektrische Stromscheiben bestimmt werden, die tief unter der Erde befindlichen Grenzen von ölführenden Formationen zugeordnet sind. Gemessen wird bei diesem bekannten Verfahren entlang eines aus mehreren Meßsonden gebildeten Meßprofils die Potentialdifferenz zwischen einzelnen Meßpunkten. Nach bestimmten weiteren Kriterien werden die einzelnen Meßwerte korrigiert und empirisch nach typischen Charakteristiken ausgewertet. Die Genauigkeit der Aussage hängt bei diesem bekannten Verfahren von der Bestimmung der Charakteristiken der Lagerstätten sowie der äußeren Einflußgrößen ab und ist bereits im Vergleich zu der bekannten seismischen Messung zumindest für eine exakte Bestimmung der Lagerstättengrenzen unbefriedigend.

Aufgabe der Erfindung ist es, ein sowohl meßtechnisch als auch auswertungsmäßig vereinfachtes und verbilligtes Verfahren zur Verfügung zu stellen, mit dessen Hilfe sich Gas oder andere Kohlenwasserstoffe und die Grenzen der unterirdischen Lagerstätten unmittelbar an der Erdoberfläche zuverlässig und mit ausreichender Genauigkeit bestimmen lassen.

Voraussetzung für das Verfahren gemäß gattungsmäßiger Ausgangslage, d.h. die Messung einer Anzahl von Eigenpotentialen mit Hilfe von profilweise oder flächenhaft an der Erdoberfläche verlegten Meßsonden sind elektrische Leiter im Untergrund, die durch die mit salinem Wasser gefüllten Speichersande gebildet sind. Da in einem Aquiferspeicher leitendes salines Wasser durch nicht leitendes Gas ersetzt wird, kann unterstellt werden, daß sich Gas und salines Wasser durch unterschiedliche Potentiale bemerkbar machen. Andere Einflußgrößen der Eigenpotentiale an der Erdoberfläche sind vor allem das sich zeitlich ändernde Erdmagnetfeld, die sich ebenfalls zeitlich ändernde Temperatur sowie etwaige stärkere Leitfähigkeittsunterschiede des Bodens an den Meßstellen. Die beiden dynamischen Einflußgrößen ändern sich aber relativ langsam. Eventuelle Störeinflüsse durch Leitungen, Bebauung, menschliche Aktivitäten usw. sollten ebenfalls berücksichtigt werden.

Als physikalischen Zusammenhang zwischen Gas und Potential kann man annehmen daß ein Elektrolyt (salines Wasser) durch, einen Nicht-Elektrolyt (Gas) ersetzt ist. Dadurch vermindert sich oberhalb dieser Stellen das an der Oberfläche als Summe aller Einflußgrößen gemessene Eigenpotential.

Eine besonders einfache Lösung der oben genannten Aufgabe besteht erfindungsgemäß darin, daß die Eigenpotentialwerte aller Sonden meßzyklisch während einer bestimmten Meßdauer abgefragt werden, daß die Sonden nach niedrigen und hohen Eigenpotentialwerten in solche oberhalb der Lagerstätte, solche mit Sicherhet außerhalb der Lagerstätte und in einem Übergangsbereich gelegene Sonden sortiert werden, daß ein Potentialmittelwert für die Sonden außerhalb der Lagerstätte berechnet wird, daß eine Stufenfunktion aus den potentialmittelwerten der Sonden oberhalb der Lagerstätte über den Sonden-Entfernungen entwickelt und eine der Steigung der Stufenfunktion entsprechende, vorzugsweise lineare Glättungskurve gebildet wird, und daß der Schnittpunkt der in Richtung der Lagerstätte verlängerten Potentialmittelwertgeraden der sicher außerhalb der Lagerstätte liegenden Sonden mit der Glättungskurve als Ort der Grenze der unterirdischen Lagerstätte bestimmt wird.

Bei dieser Lösung wird näherungsweise davon ausgegangen, daß die Gasmächtigkeit linear zur Grenze der unterirdischen Lagerstätte hin abnimmt. Dementsprechend linear ist auch der Zusammenhang zwischen der Potentialzunahme und der Gasmächtigkeitsabnahme. Bei Eliminierung äußerer statischer und dynamischer Einflußgrößen kann davon ausgegangen werden, daß die mittleren Potentialmeßwerte aller Sonden im nicht gasgefüllten Teil der Struktur von der Lagerstättengrenze aus gleich bleiben. Für die Eliminierung der zeitveränderlichen äußeren Einflußgrößen, wie Erdmagnetfeld und Temperatur, ist Voraussetzung, daß alle Sonden eines Sondenprofils praktisch zeitgleich, jedenfalls in schneller Abfolge (z.B. 5 Sonden pro Sekunde) abgefragt und erfaßt werden. Zur Verbesserung des Verhältnisses von Nutzsignal zu Störsignal werden Stapelungen durchgeführt, wobei die Stapelrate vorgewählt werden kann. Der gestapelte Eigenpotentialwert kann digital auf magnetische Datenträger eines Mikrocomputers gespeichert werden.

Diese Bestimmung der Grenzen von unterirdischen Lagerstätten durch Eigenpotentialmessung ist erfindungsgemäß dadurch weitergebildet, daß die Sonden in einer Sondenprofilreihe in etwa gleichem gegenseitigen Abstand verlegt werden und daß als Glättungskurve eine Gerade verwendet wird, die durch einander im wesentlichen entsprechende geometrische punkte der Stufenfunktion in einer Koordinatendarstellung verläuft, bei der die Eigenpotentialmittelwerte der Sonden über deren Entfernung in der Sondenprofilreihe eingetragen sind. Die Auswertung der Potentialmeßwerte läßt sich dabei besonders einfach graphisch durchführen, wobei der Schnittpunkt der Mittelwertgeraden mit der ebenfalls geraden Glättungskurve einen auf der Lagerstättengrenze liegenden Punkt darstellt.

Eine alternative Lösung für der Bestimmung des Gasrandes mit Hilfe von Eigenpotentialmessungen ist erfindungsgemäß dadurch gekennzeichnet, daß die Eigenpotentiale aller Sonden in einer Folge aus periodischen Meßzyklen meßzyklisch während einer bestimmten Meßdauer abgefragt werden, daß die periodischen Meßwerte jeder einzelnen Sonde in einer Meßzyklusfolge einer Hochpaßfilterung unterworfen werden, bei der die höherfrequenten Meßwertänderungen (Amplitudendifferenzen) von wesentlich längerperiodischen Meßwertänderungen getrennt werden, daß aus den höherfrequenten Meßwertänderungen jeder Sonde ein Mittel und/oder Summenwert als Maß für die höherfrequenten Amplituden der zugehörigen Sondenmeßwerte bestimmt wird, daß die höherfrequenten Amplituden der Sonden eines Meßsondenprofils miteinander verglichen werden und daß der Ort, an welchem sich die höherfrequenten Amplituden benachbarter Sonden abrupt ändern, als Grenze der unterirdischen Lagerstätte gewertet wird.

Diese alternative Lösung geht von der aus systematischen Untersuchungen gewonnenen Erkenntnis aus, daß sich das elektrische Feld an der Oberfläche über einer Gaslagerstätte und damit die Meßwerte von aufeinanderfolgenden periodischen Meßzyklen jeweils sondenweise viel stärker ändern als an Sonden außerhalb des Lagerstättenbereichs.

Um eine deutliche Selektion zwischen den zeitlich veränderlichen Umwelteinflüssen, wie Erdmagnetfeld und Temperatur von den zur Gasrandbestimmung herangezogenen Eigenschwingungsamplituden zu erreichen, ist die Frequenz der periodischen Meßzyklen, mit denen jedes Meßsondenprofil abgefragt wird, deutlich höher als die Änderungsfrequenzen dieser Umwelteinflüsse gewählt.

Die erfindungsgemäße Eigenpotentialmessung unter Verwendung von in einem Meßsondenprofil in gegenseitigem Abstand hintereinander angeordneten Meßsonden läßt sich auch zur Bestimmung der Zunahme der Gasmächtigkeit beim Speicheraufbau verwenden. Hierzu wird zunächst eine Nullmessung, d.h. eine Messung ohne Gas oder andere Kohlenwasserstoffe durchgeführt. Die beim Speicheraufbau im Meßsondenprofil durch zeitlich aufeinanderfolgende Eigenpotentialmessungen gewonnenen Spannungsdefizite oder Änderungen der Amplitudenverhältnisse sind bei geeigneter Eichung ein Maß für die Zunahme der Gasmächtigkeit im Gasspeicher.

Im folgenden wird die erfindungsgemäße Messung von Eigenpotentialen zur Bestimmung der Grenzen von mit Kohlenwasserstoffen gefüllten unterirdischen Lagerstätten anhand der Zeichnung näher erläutert. In der Zeichnung zeigen:

Fig. 1 einen Lageplan der in dem beschriebenen Beispiel zur Gasrandbestimmung verwendeten Meßsonden, die in drei Profilen I, II und III angeordnet sind;

Fig. 2 ein Diagramm der für die einzelnen Sonden des Profils I ermittelten Potentialmittelwerte, aufgetragen über die Sondenentfernung, zur Erläuterung eines ersten erfindungsgemäßen Verfahrens zur Bestimmung des Gasrandes aus den Eigenpotentialmittelwerten der Sonden;

Fig. 3A die Eigenpotentialmeßwerte einer im Oberflächenbereich außerhalb der Gaslagerstätte gelegenen Sonde über die gesamte Meßdauer bei 20-Minuten Intervallen der Meßwertabfrage;

Fig. 3B eine Darstellung entsprechend Figur 3A für eine Sonde oberhalb der Gaslagerstätte;

Fig. 4A die Meßwertkurve gemäß Figur 3A nach Hochpaßfilterung;

Fig. 4B die Meßwertkurve gemäß Figur 3B nach Hochpaßfilterung;

Fig. 5 eine Darstellung der Abweichungen der Potentialwerte von den Sondenmittelwerten nach Hochpaßfilterung zur erfindungsgemäßen Bestimmung des Gasrandes im Profil II nach einem alternativen Verfahren.

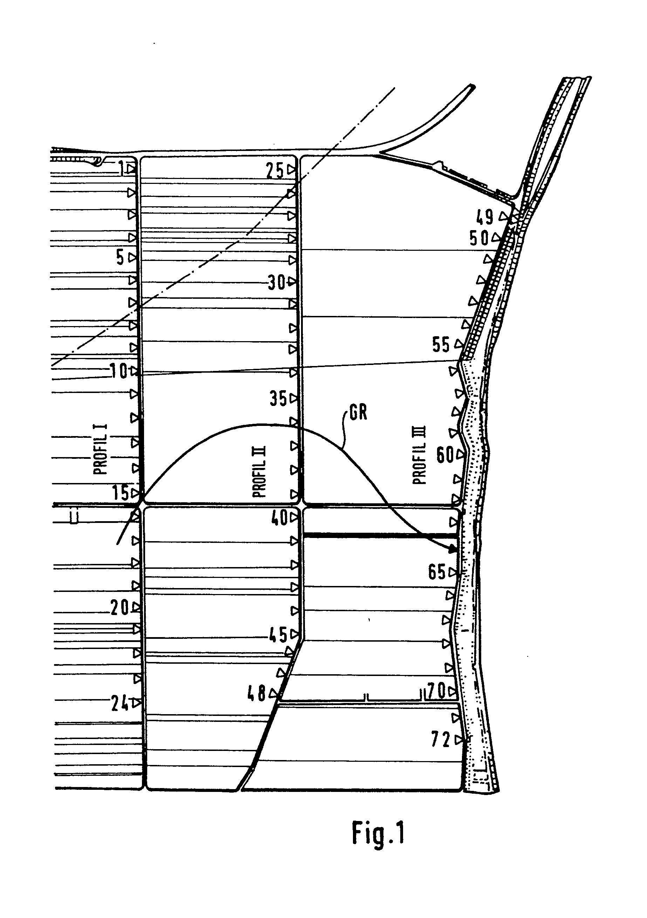

Fig. 1 zeigt den Lageplan von potentialmeßsonden, die im Zuge eines experimentellen Meßprogramms zur Gasrandbestimmung an einer Seite eines Aquiferspeichers durch Eigenpotentialmessungen eingesetzt wurden. Im Abstand von ca. 350 m wurden drei Meßsondenprofile I, II und III mit je 24 Sonden bei einem Sondenabstand von ca. 50m verlegt. Die einzelnen Sonden sind als Dreiecke dargestellt. Die Meßsondenprofile hatten eine solche Anordnung, daß die in Fig. 1 unten angeordneten Meßsonden in allen Profilen mit Sicherheit über dem mit Gas gefüllten Teil der Struktur, im oberen Teil dagegen über dem wassergefüllten Aquifer lagen. Eine Referenzsonde befand sich über dem wassergefüllten Aquifer.

Zur Meßeinrichtung gehörten die Sonden mit den profilweise verlegten Meßkabeln und — an einer zentralen Auswertestation —, ein digitaler Meßwertaufnehmer, ein Mittelwertrechner und ein Mikrocomputer als Steuer- und Speichereinheit. Die weiter unten erläuterten Sondierungskurven (Eigenpotentialwerte als Funktion der Sondenentfernung auf der Erdoberfläche) wurden auf einem mit dem Computer verbundenen Plotter gezeichnet.

Un den Einfluß der oberflächennahen Bodenschichten auf die gemessenen Potentialwerte untersuchen zu können, wurden an allen 72 Sondenpositionen jeweils 20 cm neben jeder Sonde und in 15 cm Tiefe (Sondentiefe) Bodenproben genommen. An den Bodenproben wurden wiederholt der pH-Wert sowie die spezifische elektrische Leitfähigkeit bestimmt. Um veränderliche äußere Einflüsse auf die Potentialmeßwerte während der Meßzeit bei der Auswertung berücksichtigen zu können, wurden die Temperatur- und Luftdruckwerte gemessen und die Daten für die Änderungen des Erdmagnetfeldes (Deklination, Vertikalintensität und Horizontalintensität) eingeholt.

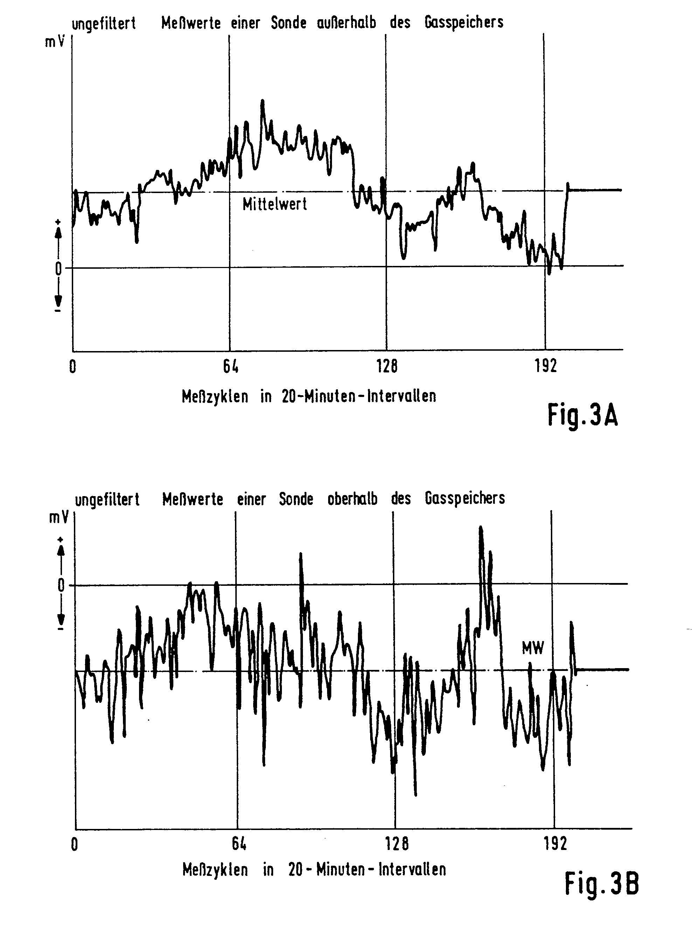

Innerhalb eines Zeitraums von 67 Stunden wurden in 20-Minuten-Intervallen die Eigenpotentialwerte aller Sonden in den drei Profilen I, II und III aufgenommen, Die Meßwertabfrage der einzelnen Sonden eines Profils erfolgte in jedem einzelnen Meßzyklus in schneller Abfolge, d.h. ca. 5 Meßwerte pro Sekunde. Alle 200 Potentialmeßwerte für jede der Sonden wurden über die gesamte Meßdauer aufgenommen, woraus sich die in den Figuren 3A und 3B als Beispiel für zwei an entgegengesetzten Profilenden angeordnete Sonden dargestellten Tagesgänge ergaben.

Aus der Analyse der Tagesgänge aller zu einem Profil gehörigen Sonden lassen sich die folgenden grundsätzlichen Feststellungen treffen:

a) Die Mittelwerte der Tagesgänge der außerhalb des Gasspeichers gelegenen Sonden liegen in der Regel deutlich oberhalb derjenigen von Sonden im Bereich des Gasspeichers. Dies zeigen die Mittelwertlinien der Tagesgänge gemäß Fig. 3A und 3B im Vergleich zum Bezugspotential.

b) Alle Mittelwertkurven lassen langperiodische Schwankungen erkennen, die vor allem auf Einflüsse des sich zeitlich (langsam) ändernden Erdmagnetfeldes und Temperatureinflüsse im Verlauf der gesamten Meßdauer zurückgehen dürften.

c) Die Meßwertausschläge zwischen aufeinanderfolgenden Meßwerten sind bei Sonden oberhalb des Gasspeichers wesentlich ausgeprägter als bei Sonden außerhalb des Gasspeichers; dies gilt jedenfalls bei Eliminierung der langperiodischen Änderungen aufgrund äußerer Einflußgrößen.

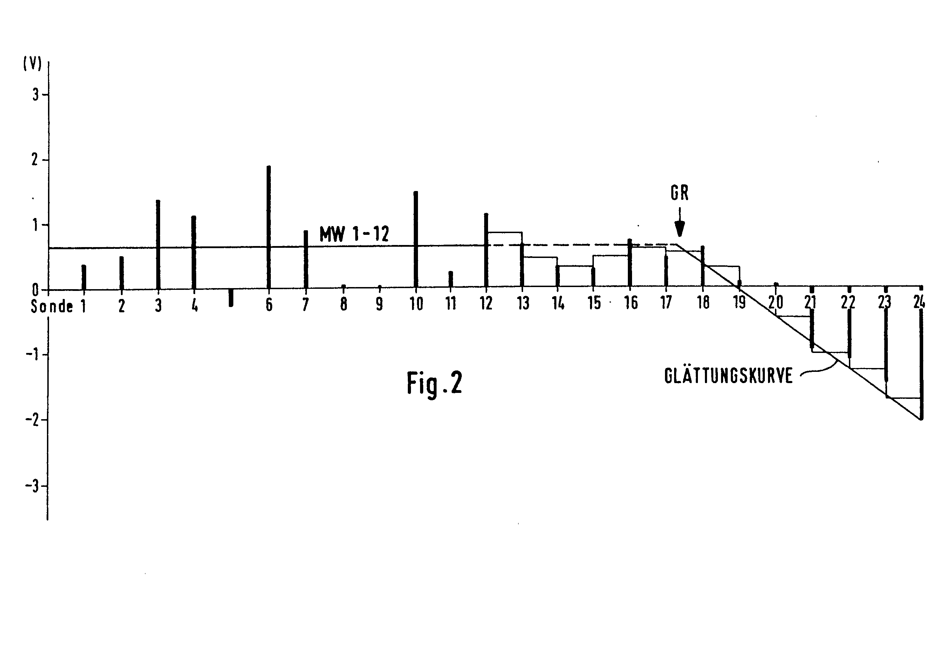

Eine besonders einfache Verfahrensweise zur Bestimmung des Gasrandes wird im folgenden anhand der Fig. 2 für das Profil I mit den Sonden 1 bis 24 erläutert.

Aus den Tagesgängen der einzelnen Sonden werden die Mittelwerte MW oder auch die Summenwerte ermittelt und entlang der X-Koordinate als Funktion der Sondenentfernung auf der Erdoberfläche als Spannungswerte aufgetragen. Aus den Mittelwerten der mit Sicherheit außerhalb des Gasspeichers gelegenen Sonden 1 bis 12 wird ein gemeinsamer Mittelwert berechnet, als Mittelwertgerade parallel zur X-Koordinate eingetragen und über die Sonde 12 hinaus in Richtung der höheren Sondennummern, wie gestrichelt dargestellt, verlängert. Die Sonden mit den höchsten Sondennummern liegen mit Sicherheit oberhalb des Gasspeichers. Aus deren Mittelwerten, die gemäß Fig. 2 deutlich negativ sind, zum Gasrand hin aber ansteigen, wird eine Stufenfunktion gebildet und etwa durch die Stufenecken eine die Steigung der Stufenfunktion darstellende Glättungsgerade gelegt. Unter der Voraussetzung einer angenähert linearen Abnahme der Gasmächtigkeit im Gasspeicher kann man mit hinreichender Genauigkeit den Schnittpunkt der Glättungsgeraden mit der Mittelwertgeraden MW in Fig. 2 als den geometrischen Ort an der Erdoberfläche definieren, unter dem sich der Gasrand GR befindet.

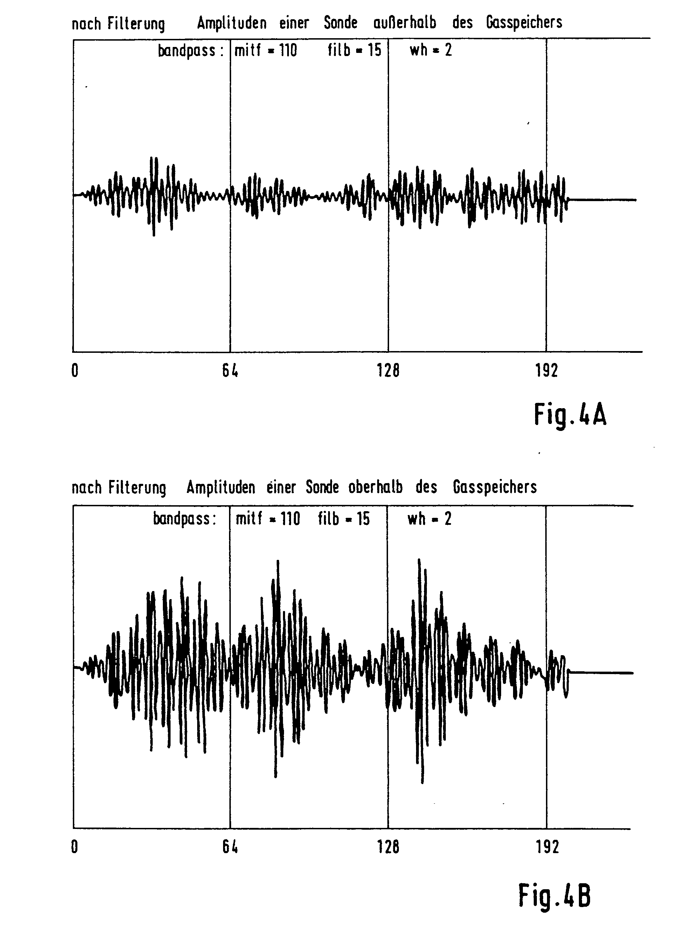

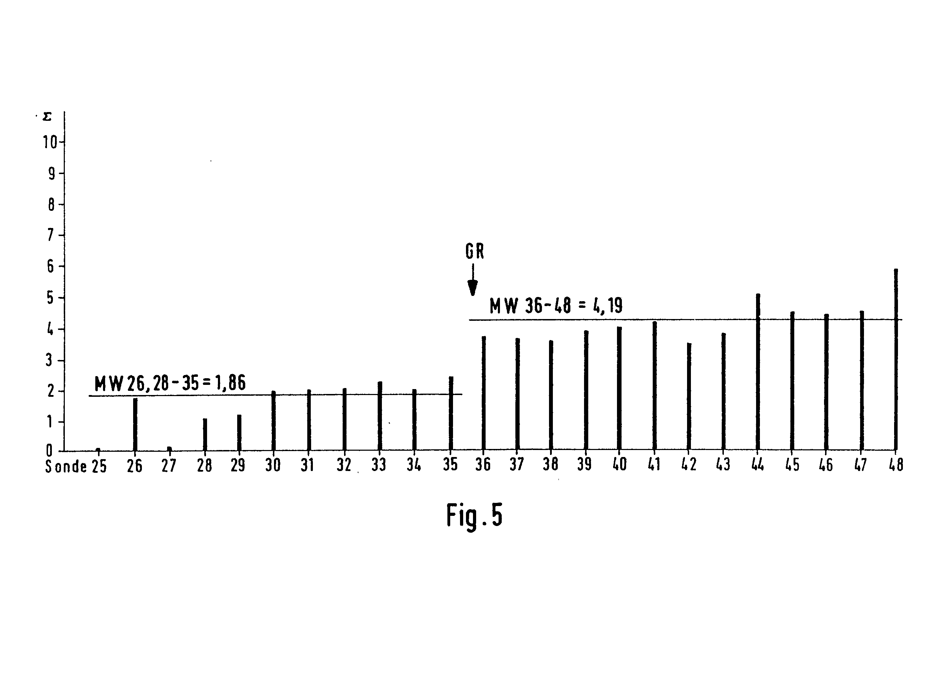

Das alternative Verfahren zur Bestimmung des Gasrandes von Aquiferspeichern ist von der vorstehend genannten Voraussetzung einer linearen Abnahme der Gasmächtigkeit unabhängig anwendbar. Dieses alternative Verfahren wird nachfolgend anhand der Figuren 4 und 5 beschrieben.

Die Fig. 4A und 4B zeigen die in den Figuren 3A bzw. 3B dargestellten Tagesgänge nach einer Band bzw. Hochpaßfilterung unter Verwendung eines Filters 110/15 mit einer Filtermitte bei 0,78 h. Dabei sind ersichtlich die langperiodischen Meßwertänderungen der einzelnen Sonden, für die vor allem die äußeren zeitveränderlichen Einflußgrößen ursächlich sind, eliminiert. Die Unterschiede in den so gewonnenen Amplitudenkurven sind signifikant zwischen der Sonde außerhalb des Gasspeichers (Fig. 4A) und der Sonde oberhalb des Gasspeichers (Fig. 4B).

Zur Bestimmung des Gasrandes GR werden gemäß Fig. 5 die Mittelwerte der Amplitudenänderungen der Sonden eines Profils — hier profil II — als Funktion der Sonden-Oberflächenentfernung aufgezeichnet. An der in Fig. 5 mit GR bezeichneten Stelle, d.h. zwischen den Sonden 35 und 36, ändern sich die ansonsten bereichsweise ziemlich einheitlichen Amplitudenmittelwerte sprunghaft. Dieser abrupte Übergang von niedrigen Amplituden auf hohe Amplituden wird als Gasrand für das zugehörige Profil II bestimmt.

Aufgrund der beschriebenen Verfahrensweise wurde der Gasrand GR an den Profilen I, II und III durch einfache Eigenpotentialmessungen an der Erdoberfläche bestimmt; nach beiden Verfahrensweisen (Fig. 2 und Fig. 5) gewonnene Ergebnisse stimmten mit dem durch Bohrungen bekannten Lagerstättenmodell ziemlich genau überein.

Die erfindungsgemäße Eigenpotentialmessung an der Erdoberfläche stellt neben der Gasseismik ein zweites, wesentlich billigeres Verfahren zur Verfügung, um Gas oder andere Kohlenwasserstoffe im Untergrund direkt zu orten. Liegt eine Nullmessung bereits vor, so läßt sich beim Speicheraufbau die Zunahme der Gasmächtigkeit, aber auch Änderungen in der Ausdehnung des Gases mit Eigenpotentialmessungen direkt bestimmen.

**Patentansprüche**

1. Geoelektrisches Verfahren zur Bestimmung der Grenzen von mit Kohlenwasserstoffen, wie Erdgas oder Erdöl, gefüllten unterirdischen Lagerstätten, wobei wenigstens ein Meßsondenprofil, bestehend aus mehreren in gegenseitigem Abstand hintereinander angeordneten, die Eigenpotentiale an der Erdoberfläche messenden Sonden, an der Erdoberfläche derart verlegt wird, daß mehrere Meßsonden außerhalb und mehrere Meßsonden innerhalb des die Lagerstätte überdeckenden Erdoberflächenbereichs liegen, dadurch gekennzeichnet,
daß die Eigenpotentialwerte aller Sonde meßzyklisch während einer bestimmten Meßdauer abgefragt werden,
daß die Sonden nach hohen und niedrigen Eigenpotentialwerten in solche oberhalb der Lagerstätte, solche mit Sicherheit außerhalb der Lagerstätte und in einem Übergangsbereich gelegene Sonden sortiert werden,
daß ein Potentialmittelwert für die Sonden außerhalb der Lagerstätte berechnet wird,
daß eine Stufenfunktion aus den Potentialmittelwerten der Sonden oberhalb der Lagerstätte bezogen auf die Sonden-Entfernungen entwickelt und eine der Steigung der Stufenfunktion entsprechende, vorzugsweise lineare Glättungskurve gebildet wird, und
daß der Schnittpunkt der in Richtung der Lagerstätte verlängerten potentialmittelwertgeraden der sicher außerhalb der Lagerstätte liegenden Sonden mit der Glättungskurve als Ort der Grenze der unterirdischen Lagerstätte bestimmt wird.

2. Verfahren nach Anspruch 1, dadurch gekennzeichnet, daß die Sonden in einer Sondenprofilreihe wenigstens gruppenweise in gleichem gegenseitigen Abstand verlegt werden und daß als Glättungskurve eine Gerade verwendet wird, die durch einander im wesentlichen entsprechende geometrische Punkte der Stufenfunktion in einer Koordinatendarstellung verläuft, bei der die Eigenpotentiale der Sonden über deren Entfernung in der Sondenprofilreihe eingetragen sind.

3. Geoelektrisches Verfahren zur Bestimmung der Grenzen von mit Kohlenwasserstoffen, wie Erdgas oder Erdöl, gefüllten unterirdischen Lagerstätten, wobei wenigstens ein Meßsondenprofil, bestehend aus mehreren in gegenseitigem Abstand hintereinander angeordneten, die Eigenpotentiale an der Erdoberfläche messenden Sonden, an der Erdoberfläche derart verlegt wird, daß mehrere Meßsonden außerhalb und mehrere Meßsonden innerhalb des die Lagerstätte überdeckenden Erdoberflächenbereichs liegen, dadurch gekennzeichnet,
daß die Eigenpotentialwerte aller Sonden in einer Folge aus periodischen Meßzyklen während einer bestimmten Meßdauer abgefragt werden,
daß die periodischen Meßwerte jeder einzelnen Sonde in einer Meßzyklusfolge einer Hochpaßfilterung unterworfen werden, bei der die höherfrequenten Meßwertänderungen von wesentlich längerperiodischen Meßwertänderungen getrennt werden,
daß aus den höherfrequenten Meßwertänderungen jeder Sonde ein Mittel- und/oder Summenwert als Maß für die höherfrequenten Amplituden der zugehörigen Sonde bestimmt wird,
daß die höherfrequenten Amplituden der Sonden eines Meßsondenprofils miteinander verglichen werden und
daß der Ort, an welchem sich die höherfrequenten Amplituden benachbarter Sonden abrupt ändern, als Grenze der unterirdischen Lagerstätte gewertet wird.

4. Verfahren nach Anspruch 3, dadurch gekennzeichnet, daß zur Kompensation von sich zeitlich ändernden Umwelteinflüssen, wie Erdmagnetfeld und Temperatur die Frequenz der periodischen Meßzyklen wesentlich höher als die Änderungsfrequenzen dieser Umwelteinflüsse gewählt wird.

5. Verfahren nach einem der Ansprüche 1 bis 4, dadurch gekennzeichnet, daß die zu einem Sondenprofil gehörigen Sonden in so schneller Abfolge abgefragt werden, daß ein Meßzyklus innerhalb eines Zeitraums von höchstens einer Minute beendet ist.

6. Verfahren nach einem der Ansprüche 1 bis 5, dadurch gekennzeichnet, daß zur Verbesserung von Nutzsignal zu Störsignal eine Stapelabfrage mit vorwählbarer Stapelrate durchgeführt wird.

7. Verfahren nach Anspruch 6, dadurch gekennzeichnet, daß der gestapelte Eigenpotentialwert digital auf einen magnetischen Datenträger eines Mikrocomputers gespeichert wird.

8. Verfahren nach einem der Ansprüche 1 bis 7, dadurch gekennzeichnet, daß zunächst eine Bezugsmessung des zu untersuchenden Speichereals durchgeführt wird und daß die Zunahme der Gasmächtigkeit und/oder die Gasausdehnung durch Eigenpotentialmessungen an der Erdoberfläche bestimmt wird.

**Revendications**

1. Procéde géophysique pour déterminer les limites de réservoirs souterrains d'lhydrocarbures, tels que le gaz ou le pétrole, consistant à placer au moins un alignement de plusieurs sondes de mesure, disposées à une certaine distance les unes derrière les autres afin de relever le potentiel naturel du sol, les sondes étant réparties de façon à ce qu'un certain nombre d'entre elles se trouve à l'extérieur et un certain nombre à l'intérieur du périmètre en surface décrit par le réservoir, caractérisé par le fait que le potentiel naturel du sol mesuré par toutes les sondes est relevé à intervalles pendant une durée prédéterminée du cycle de mesure, que les sondes sont classées en fonction du potentiel, soit

élevés soit faibles, relevés, comme appartenant au groupe situé au-dessus du réservoir, à celui situé définitivement en dehors du réservoir ou à celui situé dans une zone transitoire, qu'un potentiel moyen est déterminé par le calcul pour celles des sondes situées en dehors du périmètre décrit par le réservoir, qu'en fonction de la distance de chacune des sondes une fonction échelon est établie à partir de la moyenne des potentiels relevés par les sondes situées au-dessus du réservoir, que cette courbe est lissée par une courbe, de préférence linéaire correspondant à la pente de la fonction échelon et que le point d'intersection de la droite, prolongée en direction du réservoir et représentant le potentiel moyen relevé par les sondes définitivement situées en dehors de celui-ci, avec la courbe de lissage est supposé correspondre à la limite du réservoir souterrain.

2. Procédé selon la revendication 1 caractérisé par le fait que les sondes constituant un alignement sont disposées, au moins par groupes, à distance égale les unes des autres et que le lissage se fait par une droite, passant dans un système des cordonnées, selon les points géométriques de la fonction échelon, les potentiels naturels relevés par chacune des sondes étant représentés en fonction de l'emplacement de celles-ci à l'intérieur de l'alignement.

3. Procédé géophysique pour déterminer les limites de réservoirs souterrains de hydrocarbures, tels que le gaz ou le pétrole, consistant à placer au moins un alignement de plusieurs sondes de mesure disposées à une certaine distance les unes derrière les autres afin de relever le potentiel naturel du sol, les sondes étant réparties de façon à ce qu'un certain nombre d'entre-elles se trouve à l'extérieur et un certain nombre à l'intérieur du périmètre en surface décrit par le réservoir, caractérisé par le fait que le potentiel naturel du sol mesuré par toutes les sondes est relevé lors de plusieurs cycles de mesure périodiques d'une durée Prédéterminée, que les valeurs périodiquement relevées par chaque sonde sont filtrées pour faire passer les signaux émis dans une gamme de fréquences relativement élevées et retenir ceux émis dans une gamme de fréquences plus basses, qu'à partir des variations du potentiel relevées par chaque sonde dans la gamme de fréquences relativement élevées sont établis une moyenne et/ou un total, servant d'étalon pour les amplitudes de fréquence élevée enregistrées par chaque sonde, que les amplitudes de fréquence élevée enregistrées par chacune des sondes faisant partie d'un alignement sont comparées entre-elles et que le point où les amplitudes de fréquence élevée enregistrées par deux sondes voisines varient subitement est supposé correspondre à la limite du réservoir souterrain.

4. Procédé selon la revendication 3 caractérisé par le fait que pour compenser l'effet des influences extérieures variant en fonction du temps, telles que le champ magnétique de la terre et la température, la cadence choisie pour les cycles de mesures périodiques est beaucoup plus rapide que celle des variations de ces influences extérieures.

5. Procédé selon l'une quelconque des revendications 1 à 4 caractérisé par le fait que les valeurs relevées par l'ensemble des sondes d'un alignement sont captées si rapidement qu'un cycle de mesure ne dure tout au plus qu'une minute.

6. Procédé selon l'une quelconque des revendications 1 à 5 caractérisé par le fait que pour mieux séparer les signaux de bruit, les signaux sont captés par lots et que le nombre de signaux formant un lot peut être prédéterminé.

7. Procédé selon la revendication 6 caractérisé par le fait que les signaux de potentiel ainsi groupés par lots sont enregistrés en valeur digitale sur un support magnétique d'un microordinateur.

8. Procédé selon l'une quelconque des revendications 1 à 7 caractérisé par le fait qu'il est procédé d'abord à une mesure de référence de la roche réservoir à étudier et que l'augmentation de l'épaisseur et/ou de l'étendue de la bulle de gaz est déterminée par les mesures du potentiel naturel à partir de la surface du sol.

**Claims**

1. Geo electric method of determining the limit of an underground reservoir containing hydrocarbons such as gas or oil, wherein at least one string of measuring probes consisting of several measuring probes suitable for the measurement of surface potentials, said probes being linearly spaced relative to each other, is arranged on the surface such that several probes are located outside and several probes are located inside the area of the surface over said reservoir characterized in that the potentials measured by each such probe are polled at intervals over the given duration of a measurement cycle, that said probes, by using low and high potentials so polled, are sorted into probes located over said reservoir, probes positively not located over said reservoir and probes located in an intermediate area, that an average value of potential is computed from the potentials measured by each probe so located outside said area of the surface over said reservoir, that a step function is determined from the average value of potential for every probe so located inside said area of the surface over said reservoir, with subintervals of said step function being related to the distances between said probes, and a smoothed preferably linear function having a slope corresponding to the slope of said step function is formed and that the point of intersection of the average potential value curve for the probes positively not located over said reservoir prolonged in the direction of said reservoir and the curve representing said smoothed function is taken to be the limit of said reservoir.

2. A method according to claim 1 characterized in that the probes of one such string are laid in an at least groupwise equally spaced relationship and that said curve representing said smoothed function is a straight line passing through substantially corresponding geometric points of the curve representing said step function in a coordinate system, the average values of potential determined for all probes being plotted as a function of distance in said string of measuring probes.

3. Geo electric method of determining the limit of an underground reservoir containing hydrocarbons, such as gas or oil, wherein at least one string of measuring probes consisting of several measuring probes suitable for the measurement of surface potentials said probes being linearly spaced relative to each other, is arranged on the surface such that several probes are located outside and several probes are located inside the area of the surface over said reservoir characterized in that the potentials measured by each such probe are polled in a sequence of periodic cycles over a given duration of measurement, that the periodic potential signals so polled for every probe in a sequence of cycles are high-pass filtered to separate higher frequency variations in said signals from substantially lower frequency variations in said signals, that from said higher frequency variations for each probe, an average value and/or the sum of all such signals is determined as a measure of the higher frequency amplitude for each probe, that the higher frequency amplitudes of all probes of said at least one string of measuring probes are compared and in that the location at which the higher frequency amplitudes of adjacent probes change abruptly is taken to be the limit of said reservoir.

4. A method according to claim 3 characterized in that the frequency of said periodic cycles is substantially higher than the frequency of changes in environmental parameters, such as the magnetic fields of the Earth or temperature, to make up for the effect of such environmental parameters.

5. A method according to any one of claims 1 through 4 characterized in that the probes of one such string of measuring probes are polled at a rate allowing the completion of one polling cycle within a time span not exceeding one minute.

6. A method according to any one of claims 1 through 5 characterized in that the signals so polled are stacked for a preselectable number of polls to improve the signal-to-noise ratio.

7. A method according to claim 6 characterized in that the potential signals so stacked are transferred to a magnetic data medium associated with a micro-computer for digital storage.

8. A method according to any one of claims 1 through 7 characterized in that a reference survey of the underground reservoir area is first made and that surface potential surveys are made thereafter to determine the increase in the thickness and/or the extension of the gas accumulation in said reservoir.

Fig.1

Fig. 2

ungefiltert   Meßwerte einer Sonde außerhalb des Gasspeichers

mV

Mittelwert

+

0

−

0          64          128          192

Meßzyklen in 20-Minuten-Intervallen

## Fig. 3A

ungefiltert   Meßwerte einer Sonde oberhalb des Gasspeichers

mV

+

0

−

MW

0          64          128          192

Meßzyklen in 20-Minuten-Intervallen

## Fig. 3B

3

nach Filterung    Amplituden einer Sonde außerhalb des Gasspeichers

bandpass: | mitf = 110    filb = 15 | wh = 2

0          64          128          192

Fig.4A

nach Filterung    Amplituden einer Sonde oberhalb des Gasspeichers

bandpass: | mitf = 110    filb = 15 | wh = 2

0          64          128          192

Fig.4B

Fig. 5